Europäisches Patentamt

European Patent Office

Office européen des brevets

(19)

(11) **EP 1 324 210 A1**

(12) ## DEMANDE DE BREVET EUROPEEN

(43) Date de publication:
**02.07.2003 Bulletin 2003/27**

(51) Int Cl.7: **G06F 17/14**

(21) Numéro de dépôt: **02080378.9**

(22) Date de dépôt: **19.12.2002**

(84) Etats contractants désignés:
**AT BE BG CH CY CZ DE DK EE ES FI FR GB GR IE IT LI LU MC NL PT SE SI SK TR**
Etats d'extension désignés:
**AL LT LV MK RO**

(30) Priorité: **28.12.2001 FR 0116998**

(71) Demandeur: **Koninklijke Philips Electronics N.V.**
**5621 BA Eindhoven (NL)**

(72) Inventeurs:
- **Miro Sorolla, Carolina, Société Civile S.P.I.D.**
  **75008 Paris (FR)**
- **Adelaide, Joseph, Société Civile S.P.I.D.**
  **75008 Paris (FR)**
- **Dhuisme, Juliette, Société Civile S.P.I.D.**
  **75008 Paris (FR)**

(74) Mandataire: **Chaffraix, Jean**
**Société Civile S.P.I.D.**
**156, Boulevard Haussmann**
**75008 Paris (FR)**

(54) **Dispositif de transformation inverse adaptatif**

(57)     La présente invention concerne un dispositif de transformation inverse de données transformées (X) en données inversement transformées (x) via une matrice de transformation inverse décomposable en sous-matrices le long d'une diagonale de la matrice. Ledit dispositif comprend des moyens de permutation (11), aptes à réordonner les données transformées selon un nombre de données à traiter. Il comprend également des modules de calcul échelonnables (12,13,14,15), aptes à effectuer un produit de données transformées réordonnées et d'une sous-matrice. Il comprend enfin des moyens de combinaison linéaire (16,17,18), aptes à combiner linéairement les données issues des modules de calcul échelonnables selon le nombre de données à traiter.

FIG.1

## Description

### Domaine technique de l'invention

La présente invention concerne un procédé et un dispositif de transformation inverse de données transformées en données inversement transformées via une matrice de transformation inverse.

Elle concerne également un procédé et un dispositif de transformation de données d'origine en données transformées via une matrice de transformation.

Elle trouve son application dans le domaine de la compression / décompression de données numériques vidéo, ces données étant, par exemple, de type MPEG (de l'anglais 'Motion Picture Expert Group'), notamment pour des appareils tels que des postes de télévisions numériques, des codeurs et décodeurs vidéo de type MPEG2 ou MPEG4, des dispositifs de stockage de données ou des téléphones mobiles.

### Etat de la technique antérieure

Les propriétés de la transformation en cosinus discrète ou DCT lui font jouer un rôle primordial dans le domaine de la compression de séquence d'images. Inversement, du côté du décodeur vidéo, la reconstruction de la séquence d'images est assurée grâce à une transformation en cosinus discrète inverse ou IDCT. Les transformations en cosinus discrète directe et inverse sont utilisées dans de nombreux standards vidéo tels que JPEG, MPEG-1, MPEG-2, MPEG-4, ou H263 pour ne citer qu'eux.

La demande internationale de brevet WO99/10818 décrit un exemple d'implémentation d'une transformation en cosinus discrète inverse à deux dimensions. Selon cet état de la technique, un bloc de NxN données est inversement transformé, colonnes par colonnes, grâce à un premier processeur apte à effectuer une transformation en cosinus discrète inverse unidimensionnelle. Les résultats intermédiaires issus de ce premier processeur sont ensuite stockés temporairement dans une mémoire de transposition. Lorsque toutes les colonnes ont été traitées, les résultats intermédiaires sont inversement transformés lignes par lignes grâce à un second processeur apte à effectuer une transformation en cosinus discrète inverse unidimensionnelle. Les résultats issus du second processeur constituent le résultat final de la transformation en cosinus discrète inverse à deux dimensions. Dans le mode de réalisation décrit dans la demande internationale de brevet, les blocs à traiter comprennent 16 lignes de 16 données, et sont décomposés en blocs de taille réduite, respectivement de 8 x 8, 4 x 4, et 2 x 2 données. Une structure de calcul de type papillon permet ensuite de simplifier le calcul de la transformation en cosinus discrète inverse à deux dimensions du bloc de 16 x 16 données.

Les nouvelles applications vidéo introduisent de nouvelles fonctionnalités qui augmentent la complexité de la mise en oeuvre matérielle des transformations en cosinus discrète. Cette mise en oeuvre doit permettre d'effectuer, le cas échéant en parallèle pour différents flux vidéo, de telles transformations sur des blocs de taille différente, par exemple, de 2 x 2 données pour un codeur/décodeur de mosaïques, de 4 x 4 données pour un codeur/décodeur H26L, de 8 x 8 données pour un codeur/décodeur MPEG-2 ou 4, et de 16 x 16 données pour un codeur/décodeur JPEG2000 ou pour certains algorithmes de post-traitement. De plus, la mise en oeuvre matérielle doit être simple de manière à tenir compte de la faible consommation de certaines applications bas débits telles que les téléphones mobiles.

Or, l'état de la technique antérieure n'est pas adapté pour effectuer de façon simple une transformation en cosinus discrète inverse échelonnable, i.e. sur des blocs de taille différente. Certaines entrées du dispositif implémentant la transformation en cosinus discrète inverse pourraient éventuellement être utilisées pour calculer des transformations de blocs de 2 x 2 données, de 4 x 4 données ou de 8x 8 données, mais il faudrait alors effectuer toutes les étapes de calcul pour avoir le résultat final même pour une transformation IDCT 2 x 2. Il en résulterait une complexité trop importante pour le calcul d'une telle transformation en cosinus discrète inverse.

### Exposé de l'invention

La présente invention a pour but de proposer un procédé et un dispositif de transformation directe ou inverse via une matrice de transformation, qui permettent d'effectuer une transformation sur des blocs de taille différente avec de faibles ressources de calcul.

A cet effet, le dispositif de transformation inverse selon l'invention utilise une matrice de transformation inverse décomposée en sous-matrices le long d'une diagonale de la matrice, et comprend :

- des moyens de permutation, aptes à réordonner les données transformées selon un nombre de données à traiter,
- des modules de calcul échelonnables, aptes à effectuer un produit de données transformées réordonnées et d'une sous-matrice,
- des moyens de combinaison linéaire, aptes à combiner linéairement les données issues des modules de calcul échelonnables selon le nombre de données à traiter.

A cet effet, le dispositif de transformation selon l'invention utilise une matrice de transformation décomposée en sous-matrices le long d'une diagonale de la matrice, et comprend :

- **-** des moyens de combinaison linéaire, aptes à combiner linéairement les données d'origine,
- **-** des modules de calcul échelonnables, aptes à effectuer un produit de données issues des moyens de combinaisons linéaires et d'une sous-matrice,
- **-** des moyens de permutation, aptes à réordonner les données issues des modules de calcul échelonnables selon un nombre de données à traiter, afin de fournir les données transformées.

En symétrisant la matrice de transformation, le calcul d'une transformation bidimensionnelle revient à des calculs matriciels modulaires selon le nombre de données à traiter et à de simples combinaisons linéaires. Ainsi, un tel dispositif de transformation effectue un nombre d'opérations proportionnel à taille du bloc à traiter et donc à la complexité de la transformation. Cette solution est simple et ne nécessite que de faibles ressources de calcul. En outre, le fait que le dispositif de transformation soit apte à effectuer des calculs modulaires, permet de calculer des transformations bidimensionnelles échelonnables et rend le dispositif de transformation intégrable dans un décodeur multistandard.

## Brève description des dessins

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés parmi lesquels :

- la Fig. 1 représente la structure d'un dispositif de transformation inverse selon l'invention,
- les Figs. 2a, 2b, 2c et 2d représentent les moyens de permutation du dispositif de transformation inverse selon l'invention pour différentes configurations,
- les Figs. 3a, 3b et 3c représentent des modules de calcul échelonnables du dispositif de transformation inverse selon l'invention, respectivement pour le calcul d'une IDCT 2 x 2, 4 x 4 et 8 x 8,
- les Figs. 4a et 4b représentent des moyens de combinaison linéaire, respectivement pour le calcul d'une IDCT 4 x 4 et 8 x 8,
- la Fig. 5 représente un dispositif de décompression de données numériques vidéo compressées comprenant un dispositif de transformation inverse selon l'invention, et
- la Fig. 6 représente un dispositif de compression de données numériques vidéo comprenant un dispositif de transformation directe selon l'invention.

## Exposé détaillé d'au moins un mode de réalisation de l'invention

Dans ce qui suit, la présente invention est décrite dans le cas de transformations en cosinus discrète directe et inverse. Cependant, il apparaîtra à l'homme du métier que l'invention est applicable à toute transformation de type Fourier ou équivalent, à partir du moment où la matrice de transformation est décomposable en sous-matrices le long d'une diagonale de la matrice de transformation.

Considérons tout d'abord le cas d'une transformation en cosinus discrète inverse bidimensionnelle. Ladite transformation permet de transformer des données du domaine fréquentiel - on les appellera par la suite données transformées (X) - dans le domaine temporel - on les appellera par la suite données inversement transformées (x) - à partir de l'équation suivante :

$$x(m,n) = \sum_{i=0}^{N-1} \sum_{j=0}^{N-1} C(i,j) \cdot \cos\frac{\pi(2m+1)i}{2N} \cdot \cos\frac{\pi(2n+1)j}{2N} \cdot X(i,j) = Mi(i,j) \cdot X(i,j)$$

Comme le dispositif de transformation en cosinus discrète inverse est situé dans un produit à destination du public, il doit être conçu pour fonctionner à vitesse élevée, avec une grande souplesse et une complexité minimale.

Pour cela, la matrice de transformation inverse Mi peut être décomposée en sous-matrices le long d'une diagonale de ladite matrice, selon le procédé suivant, décrit dans le cas d'une matrice de transformation inverse 8x8.

Originellement, la matrice de transformation inverse $Mi_{8x8}$ est la suivante :

$$Mi_{8*8} = \frac{1}{2} \begin{pmatrix} \frac{1}{\sqrt{2}} & \cos\frac{\pi}{16} & \cos\frac{2\pi}{16} & \cos\frac{3\pi}{16} & \cos\frac{4\pi}{16} & \cos\frac{5\pi}{16} & \cos\frac{6\pi}{16} & \cos\frac{7\pi}{16} \\ \frac{1}{\sqrt{2}} & \cos\frac{3\pi}{16} & \cos\frac{6\pi}{16} & -\cos\frac{7\pi}{16} & -\cos\frac{4\pi}{16} & -\cos\frac{\pi}{16} & -\cos\frac{2\pi}{16} & -\cos\frac{5\pi}{16} \\ \frac{1}{\sqrt{2}} & \cos\frac{5\pi}{16} & -\cos\frac{6\pi}{16} & -\cos\frac{\pi}{16} & -\cos\frac{4\pi}{16} & \cos\frac{7\pi}{16} & \cos\frac{2\pi}{16} & \cos\frac{3\pi}{16} \\ \frac{1}{\sqrt{2}} & \cos\frac{7\pi}{16} & -\cos\frac{2\pi}{16} & -\cos\frac{5\pi}{16} & \cos\frac{4\pi}{16} & \cos\frac{3\pi}{16} & -\cos\frac{6\pi}{16} & -\cos\frac{\pi}{16} \\ \frac{1}{\sqrt{2}} & -\cos\frac{7\pi}{16} & -\cos\frac{2\pi}{16} & \cos\frac{5\pi}{16} & \cos\frac{4\pi}{16} & -\cos\frac{3\pi}{16} & -\cos\frac{6\pi}{16} & \cos\frac{\pi}{16} \\ \frac{1}{\sqrt{2}} & -\cos\frac{5\pi}{16} & -\cos\frac{6\pi}{16} & \cos\frac{\pi}{16} & -\cos\frac{4\pi}{16} & -\cos\frac{7\pi}{16} & \cos\frac{2\pi}{16} & -\cos\frac{3\pi}{16} \\ \frac{1}{\sqrt{2}} & -\cos\frac{3\pi}{16} & \cos\frac{6\pi}{16} & \cos\frac{7\pi}{16} & -\cos\frac{4\pi}{16} & \cos\frac{\pi}{16} & -\cos\frac{2\pi}{16} & \cos\frac{5\pi}{16} \\ \frac{1}{\sqrt{2}} & -\cos\frac{\pi}{16} & \cos\frac{2\pi}{16} & -\cos\frac{3\pi}{16} & \cos\frac{4\pi}{16} & -\cos\frac{5\pi}{16} & \cos\frac{6\pi}{16} & -\cos\frac{7\pi}{16} \end{pmatrix}$$

Cette matrice est simplifiée en utilisant la valeur

$$\cos\left(\frac{\pi}{4}\right) = \frac{1}{\sqrt{2}}$$

et en factorisant par

$$\frac{1}{\sqrt{2}},$$

ce qui donne :

$$Mi_{8*8} = \frac{1}{2\sqrt{2}} \begin{pmatrix} 1 & \sqrt{2}\cos\frac{\pi}{16} & \sqrt{2}\cos\frac{\pi}{8} & \sqrt{2}\cos\frac{3\pi}{16} & 1 & \sqrt{2}\cos\frac{5\pi}{16} & \sqrt{2}\cos\frac{3\pi}{8} & \sqrt{2}\cos\frac{7\pi}{16} \\ 1 & \sqrt{2}\cos\frac{3\pi}{16} & \sqrt{2}\cos\frac{3\pi}{8} & -\sqrt{2}\cos\frac{7\pi}{16} & -1 & -\sqrt{2}\cos\frac{\pi}{16} & -\sqrt{2}\cos\frac{\pi}{8} & -\sqrt{2}\cos\frac{5\pi}{16} \\ 1 & \sqrt{2}\cos\frac{5\pi}{16} & -\sqrt{2}\cos\frac{3\pi}{8} & -\sqrt{2}\cos\frac{\pi}{16} & -1 & \sqrt{2}\cos\frac{7\pi}{16} & \sqrt{2}\cos\frac{\pi}{8} & \sqrt{2}\cos\frac{3\pi}{16} \\ 1 & \sqrt{2}\cos\frac{7\pi}{16} & -\sqrt{2}\cos\frac{\pi}{8} & -\sqrt{2}\cos\frac{5\pi}{16} & 1 & \sqrt{2}\cos\frac{3\pi}{16} & -\sqrt{2}\cos\frac{3\pi}{8} & -\sqrt{2}\cos\frac{\pi}{16} \\ 1 & -\sqrt{2}\cos\frac{7\pi}{16} & -\sqrt{2}\cos\frac{\pi}{8} & \sqrt{2}\cos\frac{5\pi}{16} & 1 & -\sqrt{2}\cos\frac{3\pi}{16} & -\sqrt{2}\cos\frac{3\pi}{8} & \sqrt{2}\cos\frac{\pi}{16} \\ 1 & -\sqrt{2}\cos\frac{5\pi}{16} & -\sqrt{2}\cos\frac{3\pi}{8} & \sqrt{2}\cos\frac{\pi}{16} & -1 & -\sqrt{2}\cos\frac{7\pi}{16} & \sqrt{2}\cos\frac{\pi}{8} & -\sqrt{2}\cos\frac{3\pi}{16} \\ 1 & -\sqrt{2}\cos\frac{3\pi}{16} & \sqrt{2}\cos\frac{3\pi}{8} & \sqrt{2}\cos\frac{7\pi}{16} & -1 & \sqrt{2}\cos\frac{\pi}{16} & -\sqrt{2}\cos\frac{\pi}{8} & \sqrt{2}\cos\frac{5\pi}{16} \\ 1 & -\sqrt{2}\cos\frac{\pi}{16} & \sqrt{2}\cos\frac{\pi}{8} & -\sqrt{2}\cos\frac{3\pi}{16} & 1 & -\sqrt{2}\cos\frac{5\pi}{16} & \sqrt{2}\cos\frac{3\pi}{8} & -\sqrt{2}\cos\frac{7\pi}{16} \end{pmatrix}$$

Les deuxième et cinquième colonnes sont alors permutées, de même que les quatrième et septième colonnes, ce qui donne $Mi_{8x8}=A_{8x8}.P_8$ avec $A_{8x8}$ telle que :

$$A_{8*8} = \frac{1}{2\sqrt{2}} \begin{pmatrix}
1 & 1 & \sqrt{2}\cos\frac{\pi}{8} & \sqrt{2}\cos\frac{3\pi}{8} & \sqrt{2}\cos\frac{\pi}{16} & \sqrt{2}\cos\frac{5\pi}{16} & \sqrt{2}\cos\frac{3\pi}{16} & \sqrt{2}\cos\frac{7\pi}{16} \\
1 & -1 & \sqrt{2}\cos\frac{3\pi}{8} & -\sqrt{2}\cos\frac{\pi}{8} & \sqrt{2}\cos\frac{3\pi}{16} & -\sqrt{2}\cos\frac{\pi}{16} & -\sqrt{2}\cos\frac{7\pi}{16} & -\sqrt{2}\cos\frac{5\pi}{16} \\
1 & -1 & -\sqrt{2}\cos\frac{3\pi}{8} & \sqrt{2}\cos\frac{\pi}{8} & \sqrt{2}\cos\frac{5\pi}{16} & \sqrt{2}\cos\frac{7\pi}{16} & -\sqrt{2}\cos\frac{\pi}{16} & \sqrt{2}\cos\frac{3\pi}{16} \\
1 & 1 & -\sqrt{2}\cos\frac{\pi}{8} & -\sqrt{2}\cos\frac{3\pi}{8} & \sqrt{2}\cos\frac{7\pi}{16} & \sqrt{2}\cos\frac{3\pi}{16} & -\sqrt{2}\cos\frac{5\pi}{16} & -\sqrt{2}\cos\frac{\pi}{16} \\
1 & 1 & -\sqrt{2}\cos\frac{\pi}{8} & -\sqrt{2}\cos\frac{3\pi}{8} & -\sqrt{2}\cos\frac{7\pi}{16} & -\sqrt{2}\cos\frac{3\pi}{16} & \sqrt{2}\cos\frac{5\pi}{16} & \sqrt{2}\cos\frac{\pi}{16} \\
1 & -1 & -\sqrt{2}\cos\frac{3\pi}{8} & \sqrt{2}\cos\frac{\pi}{8} & -\sqrt{2}\cos\frac{5\pi}{16} & -\sqrt{2}\cos\frac{7\pi}{16} & \sqrt{2}\cos\frac{\pi}{16} & -\sqrt{2}\cos\frac{3\pi}{16} \\
1 & -1 & \sqrt{2}\cos\frac{3\pi}{8} & -\sqrt{2}\cos\frac{\pi}{8} & -\sqrt{2}\cos\frac{3\pi}{16} & \sqrt{2}\cos\frac{\pi}{16} & \sqrt{2}\cos\frac{7\pi}{16} & \sqrt{2}\cos\frac{5\pi}{16} \\
1 & 1 & \sqrt{2}\cos\frac{\pi}{8} & \sqrt{2}\cos\frac{3\pi}{8} & -\sqrt{2}\cos\frac{\pi}{16} & -\sqrt{2}\cos\frac{5\pi}{16} & -\sqrt{2}\cos\frac{3\pi}{16} & -\sqrt{2}\cos\frac{7\pi}{16}
\end{pmatrix},$$

$$\text{et } P_8 = \begin{pmatrix}
1 & 0 & 0 & 0 & 0 & 0 & 0 & 0 \\
0 & 0 & 0 & 0 & 1 & 0 & 0 & 0 \\
0 & 0 & 1 & 0 & 0 & 0 & 0 & 0 \\
0 & 0 & 0 & 0 & 0 & 0 & 1 & 0 \\
0 & 1 & 0 & 0 & 0 & 0 & 0 & 0 \\
0 & 0 & 0 & 0 & 0 & 1 & 0 & 0 \\
0 & 0 & 0 & 1 & 0 & 0 & 0 & 0 \\
0 & 0 & 0 & 0 & 0 & 0 & 0 & 1
\end{pmatrix}.$$

En exploitant les symétries de la matrice $A_{8x8}$, la matrice de transformation $Mi_{8x8}$ peut se décomposer de la façon suivante : $Mi_{8x8} = S_{8,8} \cdot S_{4,8} \cdot B_{8,8} \cdot P_8$ avec :

$$S_{8,8} = \begin{pmatrix}
1 & 0 & 0 & 0 & 0 & 0 & 0 & 1 \\
0 & 1 & 0 & 0 & 0 & 0 & 1 & 0 \\
0 & 0 & 1 & 0 & 0 & 1 & 0 & 0 \\
0 & 0 & 0 & 1 & 1 & 0 & 0 & 0 \\
0 & 0 & 0 & 1 & -1 & 0 & 0 & 0 \\
0 & 0 & 1 & 0 & 0 & -1 & 0 & 0 \\
0 & 1 & 0 & 0 & 0 & 0 & -1 & 0 \\
1 & 0 & 0 & 0 & 0 & 0 & 0 & -1
\end{pmatrix}, \quad
S_{4,8} = \begin{pmatrix}
1 & 0 & 0 & 1 & 0 & 0 & 0 & 0 \\
0 & 1 & 1 & 0 & 0 & 0 & 0 & 0 \\
0 & 1 & -1 & 0 & 0 & 0 & 0 & 0 \\
1 & 0 & 0 & -1 & 0 & 0 & 0 & 0 \\
0 & 0 & 0 & 0 & 1 & 0 & 0 & 0 \\
0 & 0 & 0 & 0 & 0 & 1 & 0 & 0 \\
0 & 0 & 0 & 0 & 0 & 0 & 1 & 0 \\
0 & 0 & 0 & 0 & 0 & 0 & 0 & 1
\end{pmatrix} = \begin{pmatrix} S_{4,4} & 0_{4,4} \\ 0_{4,4} & I_{4,4} \end{pmatrix},$$

où $0_{4,4}$ et $I_{4x4}$ sont respectivement la matrice nulle et la matrice identité de 4 lignes par 4 colonnes, et

$$B_{8,8} = \frac{1}{2\sqrt{2}} \begin{pmatrix} M1 & 0_{2,2} & 0_{2,4} \\ 0_{2,2} & M2 & 0_{2,4} \\ 0_{4,2} & 0_{4,2} & M3 \end{pmatrix} \text{ où } M1 = \begin{pmatrix} 1 & 1 \\ 1 & -1 \end{pmatrix}, \quad M2 = \begin{pmatrix} \sqrt{2}\cos\frac{3\pi}{8} & -\sqrt{2}\cos\frac{\pi}{8} \\ \sqrt{2}\cos\frac{\pi}{8} & \sqrt{2}\cos\frac{3\pi}{8} \end{pmatrix},$$

et

$$M3 = \begin{pmatrix} \sqrt{2}\cos\dfrac{7\pi}{16} & \sqrt{2}\cos\dfrac{3\pi}{16} & -\sqrt{2}\cos\dfrac{5\pi}{16} & -\sqrt{2}\cos\dfrac{\pi}{16} \\[2ex] \sqrt{2}\cos\dfrac{5\pi}{16} & \sqrt{2}\cos\dfrac{7\pi}{16} & -\sqrt{2}\cos\dfrac{\pi}{16} & \sqrt{2}\cos\dfrac{3\pi}{16} \\[2ex] \sqrt{2}\cos\dfrac{3\pi}{16} & -\sqrt{2}\cos\dfrac{\pi}{16} & -\sqrt{2}\cos\dfrac{7\pi}{16} & -\sqrt{2}\cos\dfrac{5\pi}{16} \\[2ex] \sqrt{2}\cos\dfrac{\pi}{16} & \sqrt{2}\cos\dfrac{5\pi}{16} & \sqrt{2}\cos\dfrac{3\pi}{16} & \sqrt{2}\cos\dfrac{7\pi}{16} \end{pmatrix}.$$

La même décomposition en sous-matrices est effectuée sur une matrice de transformation inverse 16 x 16 : $Mi_{16x16} = S_{16,16} \cdot S_{8,16} \cdot S_{4,16} \cdot B_{16x16} \cdot P_{16}$ avec

$$S_{16,16} = \begin{pmatrix} 1 & & & & & & 1 \\ & \cdot & & & & \cdot & \\ & & 1 & 1 & & & \\ & & 1 & -1 & & & \\ & \cdot & & & & \cdot & \\ 1 & & & & & & -1 \end{pmatrix}, S_{8,16} = \begin{pmatrix} S_{8,8} & 0_{8,8} \\ 0_{8,8} & I_{8,8} \end{pmatrix}, \; S_{4,16} = \begin{pmatrix} S_{4,4} & 0_{4,12} \\ 0_{12,4} & I_{12,12} \end{pmatrix},$$

et

$$B_{16,16} = \dfrac{1}{2\sqrt{2}} \begin{pmatrix} M1 & 0_{2,2} & 0_{2,4} & 0_{2,8} \\ 0_{2,2} & M2 & 0_{2,4} & 0_{2,8} \\ 0_{4,2} & 0_{4,2} & M3 & 0_{4,8} \\ 0_{8,2} & 0_{8,2} & 0_{8,4} & M4 \end{pmatrix}.$$

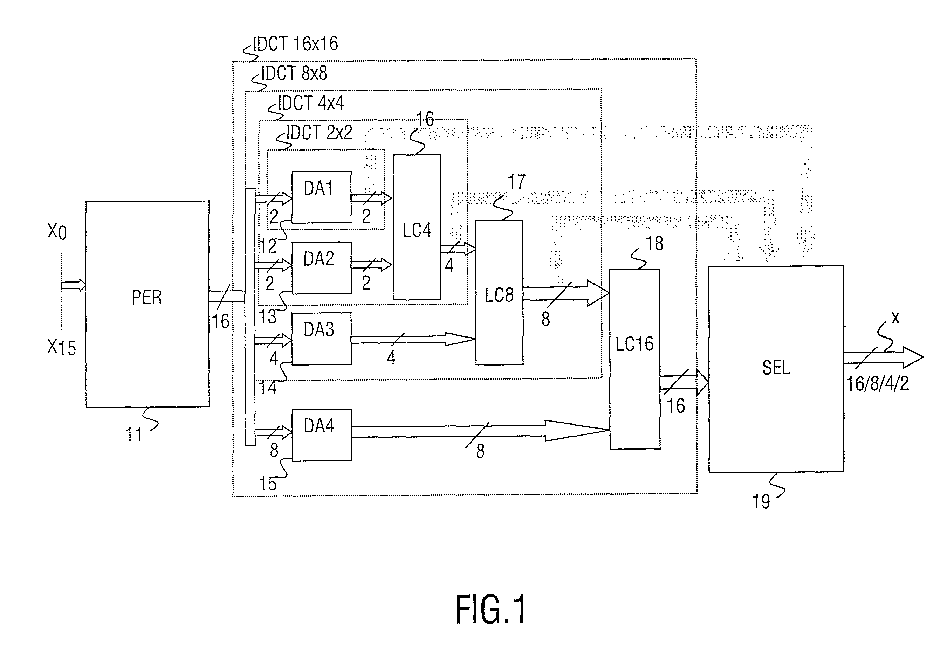

La Fig. 1 représente la structure d'un dispositif de transformation inverse selon l'invention. Ce dispositif met en oeuvre une transformation en cosinus discrète inverse IDCT échelonnable, apte à traiter des blocs de 2 x 2, 4 x 4, 8 x 8 et 16 x 16 données. Pour cela, il comprend :

- des moyens de permutation PER (11), aptes à réordonner les données transformées (X) selon un nombre de données à traiter, qui peut être 2, 4, 8 ou 16 selon la taille du bloc à traiter ;
- des modules de calcul échelonnables DA1 à DA4 (12,13,14,15), aptes à effectuer un produit de données transformées réordonnées et d'une sous-matrice, le module DA1 traitant les blocs de 2 x 2 données transformées à l'aide de la sous-matrice M1, les modules DA1 et DA2 traitant les blocs de 4 x 4 données transformées à l'aide respectivement des sous-matrices M1 et M2, les modules DA1, DA2 et DA3 traitant les blocs de 8 x 8 données transformées à l'aide respectivement des sous-matrices M1, M2 et M3, et les modules DA1, DA2, DA3 et DA4 traitant les blocs de 16 x 16 données transformées à l'aide respectivement des sous-matrices M1, M2, M3 et M4 ;
- des moyens de combinaison linéaire LC4 à LC16 (16,17,18), aptes à combiner linéairement les données issues des modules de calcul échelonnables selon le nombre de données à traiter, les moyens LC4 mettant en oeuvre la matrice $S_{4,4}$ et combinant linéairement les sorties des modules DA1 et DA2, les moyens LC8 mettant en oeuvre la matrice $S_{8,8}$ et combinant linéairement les sorties du module DA3 et des moyens LC4, et les moyens LC16 mettant en oeuvre la matrice $S_{16,16}$ et combinant linéairement les sorties du module DA4 et des moyens LC8 ;
- des moyens de sélection SEL (19), aptes à sélectionner les données issues du premier module de calcul échelonnable DA1 (12), des moyens de combinaison linéaire LC4, LC8 et LC16 (16,17,18) selon le nombre de données à traiter, afin de fournir respectivement des blocs de 2 x 2, 4 x 4, 8 x 8, 16 x 16 données inversement transformées.

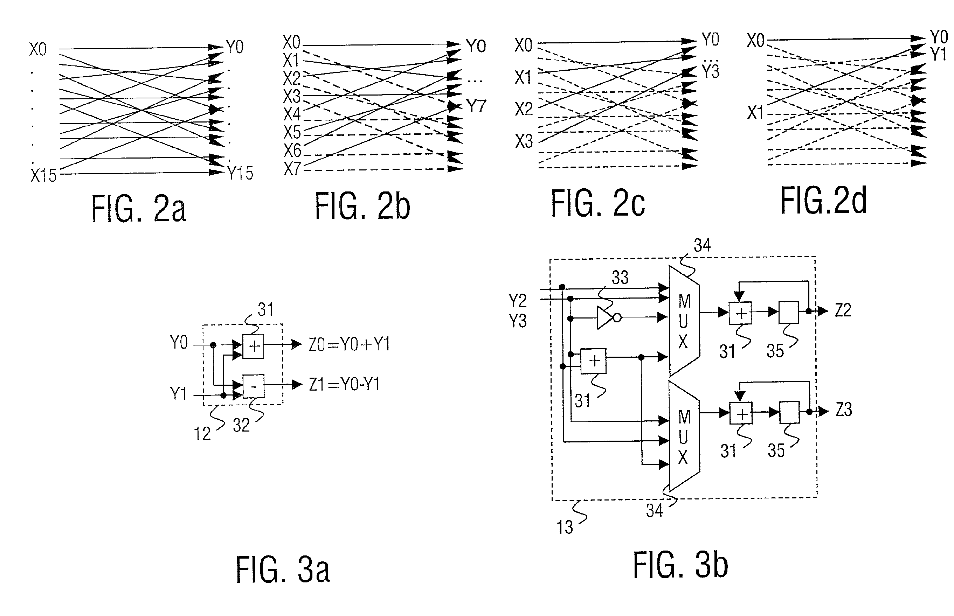

Les Figs. 2a à 2d représentent les moyens de permutation du dispositif de transformation inverse selon l'invention, dans différentes configurations. Le produit de la matrice de permutation P16 par une colonne d'un bloc de 16 x 16 données transformées X résulte en une colonne d'un bloc de données intermédiaires Y. Dans ce cas d'une transformation IDCT de 16 x 16 données transformées X, la permutation des données est réalisée par un circuit d'interconnexion représenté en Fig. 2a, Y0 correspondant à X0, Y1 correspondant à X8, Y2 à X4 et ainsi de suite. Elle est reprise par des flèches en pointillés sur les Fig. 2b à 2d.

Les moyens de permutation permettent également de réordonner les données transformées quel que soit le nombre de données à traiter. Ainsi, dans le cas d'une transformation IDCT 8 x 8, les données en entrée des moyens de permutation sont réparties une toutes les deux entrées selon le schéma de la Fig. 2b. Ainsi, le cablage des moyens de permutation reste identique, Y0 correspondant à X0, Y1 correspondant maintenant à X4, Y2 à X2 et ainsi de suite. Selon un principe similaire, les données en entrée des moyens de permutation sont réparties une toutes les quatre entrées selon le schéma de la Fig. 2c dans le cas d'une transformation IDCT 4 x 4. Ainsi, Y0 correspond à X0, Y1 à X2, Y2 à X1 et Y3 à X3. Enfin, les données en entrée des moyens de permutation sont réparties une toutes les huit entrées selon le schéma de la Fig. 2d dans le cas d'une transformation IDCT 2 x 2, Y0 correspondant à X0 et Y1 à X1.

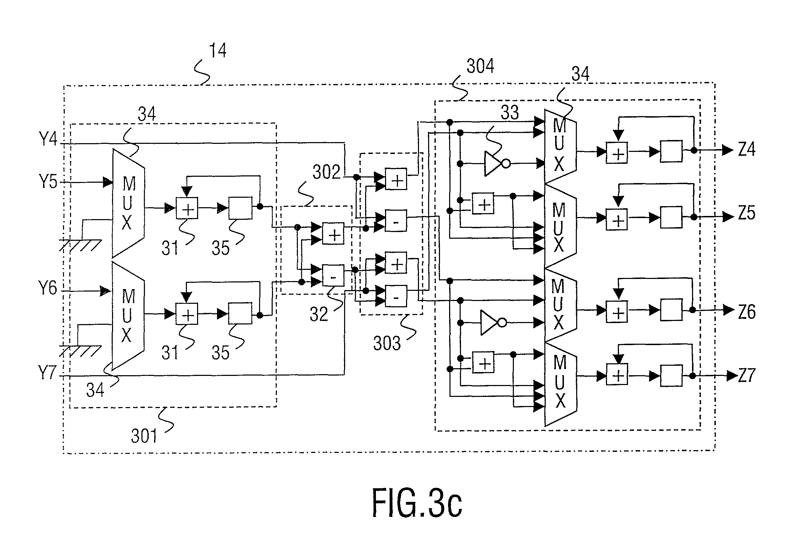

Les Figs. 3a, 3b et 3c représentent des modules de calcul échelonnables du dispositif de transformation inverse selon l'invention, respectivement pour le calcul d'une transformation IDCT 2 x 2, 4 x 4 et 8 x 8. Ces moyens de calcul échelonnables sont basés sur des algorithmes d'arithmétique distribuée. Selon un premier principe, basé sur une mémoire ROM de type en lecture seule (en anglais 'read only memory'), ces algorithmes permettent d'effectuer séquentiellement des décalages vers la droite et des additions de valeurs. L'avantage de cette technique est la réduction de la complexité de calcul puisque les multiplieurs ont été supprimés. Cependant, la mise en oeuvre de la mémoire ROM peut être problématique dans le cas de matrices de transformation de grande taille. Selon un second principe plus avantageux, les algorithmes d'arithmétique distribuée sont basés sur une suite de décalages et d'accumulations.

Dans le cas d'une transformation IDCT 2 x 2, le module de calcul échelonnable DA1 (12) est représenté à la Fig. 3a. Il reçoit les données Y0 et Y1 et implémente leur produit avec la sous-matrice M1. Pour cela, il comprend simplement un additionneur (31) effectuant la somme Z0 de Y0 et Y1 et un soustracteur (32) effectuant la soustraction Z1=Y0-Y1.

Dans le cas d'une transformation IDCT 4 x 4, le module de calcul échelonnable DA2 (13) est représenté à la Fig. 3b. Il reçoit les données Y2 et Y3 et implémente leur produit avec la sous-matrice M2. Pour cela, il comprend un inverseur (33) apte à inverser Y3, un additionneur (31) apte à ajouter Y2 et Y3, deux multiplexeurs MUX (34) aptes à sélectionner une entrée parmi leurs différentes entrées Y2, Y3, Y2+Y3 et -Y3. Il comprend enfin deux ensembles d'un additionneur (31) et d'un registre à décalage (35), aptes à calculer un résultat final (Z2,Z3) selon le principe de décalages et d'accumulations.

Par exemple, si on veut calculer le produit suivant :

$$\begin{pmatrix} A_1 & A_2 \\ A_3 & A_4 \end{pmatrix} \begin{pmatrix} Y2 \\ Y3 \end{pmatrix}$$

Le produit de la première ligne par la première colonne implique le calcul de : $A_1Y2 + A_2Y3$ $A_1$ et $A_2$ sont calculés selon leur valeur binaire en code complément à 2. Par exemple, si on a $A_1$ = 1011101001 et $A_2$ = 0100101000, il faut donc calculer : $Y2*2^0 + Y3*2^{-1} + Y2*2^{-2} + Y2*2^{-3} + (Y2+Y3)*2^{-4} + (Y2+Y3)*2^{-6} + Y2*2^{-9}$.

L'opération à effectuer est donc la suivante :

$Y2 + (Y3 + (Y2 + (Y2 + ((Y2+Y3) + (0 + ((Y2+Y3) + (0 + (0 + (Y2*2^{-1}))*2^{-1})*2^{-1})*2^{-1})*2^{-1})*2^{-1})*2^{-1})*2^{-1}$.

Le multiplexeur MUX permet de choisir ici une entrée parmi $X_1$, $X_4$, $X_1 + X_4$ et 0. Il fournit à sa sortie tout d'abord la donnée ayant la puissance la plus petite, soit ici Y2, puis la donnée est décalée de 1 bit vers la droite, ce qui revient à effectuer un produit de Y2 par $2^{-1}$. Puis, lors des deux cycles d'horloge suivant, le multiplexeur fournit la valeur nulle ; le résultat intermédiaire est alors $Y2*2^{-3}$. Puis, il fournit la donnée Y2+Y3 lors du quatrième cycle d'horloge et ainsi de suite jusqu'à obtention du résultat final $Y2*2^0 + Y3*2^{-1} + Y2*2^{-2} + Y2*2^{-3} + (Y2+Y3)*2^{-4} + (Y2+Y3)*2^{-6} + Y2*2^{-9}$ à une sortie du module de calcul échelonnable.

Dans le cas d'une transformation IDCT 8 x 8, le module de calcul échelonnable DA3 (13) est représenté à la Fig. 3c. Il reçoit les données Y4 à Y7 et implémente leur produit avec la sous-matrice M3. Pour cela, la sous-matrice M3 est encore décomposée en un produit de 4 sous-matrices M31, M32, M33 et M34 telles que :

$$M31 = \begin{pmatrix} \sqrt{2}\cos\dfrac{7\pi}{16} & 0 & 0 & -\sqrt{2}\cos\dfrac{\pi}{16} \\ 0 & \sqrt{2}\cos\dfrac{3\pi}{16} & -\sqrt{2}\cos\dfrac{5\pi}{16} & 0 \\ 0 & -\sqrt{2}\cos\dfrac{5\pi}{16} & -\sqrt{2}\cos\dfrac{3\pi}{16} & 0 \\ \sqrt{2}\cos\dfrac{\pi}{16} & 0 & 0 & \sqrt{2}\cos\dfrac{7\pi}{16} \end{pmatrix}, \quad M32 = \begin{pmatrix} 1 & 1 & 0 & 0 \\ 1 & -1 & 0 & 0 \\ 0 & 0 & 1 & 1 \\ 0 & 0 & -1 & 1 \end{pmatrix},$$

$$M33 = \begin{pmatrix} 1 & 0 & 0 & 0 \\ 0 & 1 & 1 & 0 \\ 0 & -1 & 1 & 0 \\ 0 & 0 & 0 & 1 \end{pmatrix} \text{ et } M34 = \begin{pmatrix} 1 & 0 & 0 & 0 \\ 0 & \dfrac{1}{\sqrt{2}} & 0 & 0 \\ 0 & 0 & \dfrac{1}{\sqrt{2}} & 0 \\ 0 & 0 & 0 & 1 \end{pmatrix}$$

Le module de calcul échelonnable DA3 (14) comprend 4 étages en cascade, chaque étage correspondant à une des sous-matrices M31, M32, M33 et M34. Le premier étage (301) reçoit les données Y4 à Y7 et implémente leur produit avec la sous-matrice M31. Il comprend deux multiplexeurs (34), recevant respectivement Y5 et la valeur nulle d'une part et Y6 et la valeur nulle d'autre part, reliés chacun à un ensemble d'un additionneur (31) et d'un registre à décalage (35). Le deuxième étage (302) implémente la sous-matrice M32 et comprend un additionneur (31) et un soustracteur (32). Le troisième étage (303) implémente la sous-matrice M33 et comprend deux additionneurs (31) et deux soustracteurs (32). Enfin, le quatrième étage (304) implémente la sous-matrice M34 et comprend deux additionneurs (31) et deux inverseurs (33) permettant de fournir jusqu'à quatre données en entrée de quatre multiplexeurs MUX (34). Chaque multiplexeur MUX est relié à un ensemble d'un additionneur et d'un registre à décalage, apte à fournir un résultat final (Z4 à Z7).

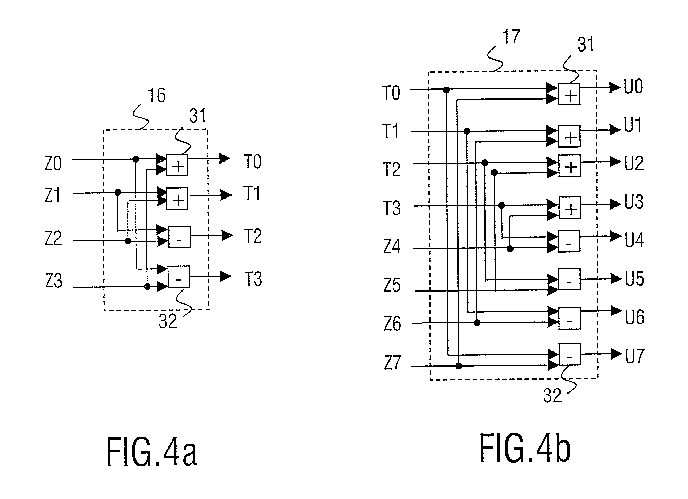

Les Figs. 4a et 4b représentent respectivement des moyens de combinaison linéaire respectivement pour le calcul d'une IDCT 4 x 4 et 8 x 8.

Selon le schéma de la Fig. 4a, les moyens de combinaison linéaire LC4 (16) correspondent à la matrice $S_{4,4}$ précédemment décrite. Ils comprennent deux additionneurs (31) qui ont pour résultats T0=Z0+Z3 et T1=Z1+Z2, et deux soustracteurs qui ont pour résultats T2=Z1-Z2 et T3=Z0-Z3.

Selon le schéma de la Fig. 4b, les moyens de combinaison linéaire LC8 (17) correspondent à la matrice $S_{8,8}$ Précédemment décrite. Ils comprennent quatre additionneurs (31) qui ont pour résultats U0=T0+Z7, U1=T1+Z6, U2=T2+Z5 et U3=T3+Z4. Ils comprennent également quatre soustracteurs qui ont pour résultats U4=T3-Z4, U5=T2-Z5, U6=T1-Z6 et U7=T0-Z7.

Les moyens de sélection SEL (19) permettent alors de sélectionner :

- les données x0=Z0 et x1=Z1 issues du premier module de calcul échelonnable DA1 (12) pour une transformation IDCT 2x2;
- les données x=T issues des moyens de combinaison linéaire LC4 (16) pour une transformation IDCT 4 x 4 ;
- les données x=U issues des moyens de combinaison linéaire LC8 (17) pour une transformation IDCT 8x8;
- ou les données x issues des moyens de combinaison linéaire LC16 (18) pour une transformation IDCT 16 x 16.

Considérons maintenant le cas d'une transformation en cosinus discrète directe.

Ladite transformation permet de transformer des données du domaine temporel dans le domaine fréquentiel à partir de l'équation suivante :

$$X(i,j) = C(i,j) \cdot \sum_{m=0}^{N-1}\sum_{n=0}^{N-1} \cos\frac{\pi(2m+1)i}{2N} \cdot \cos\frac{\pi(2n+1)j}{2N} \cdot x(m,n) = M(m,n) \cdot x(m,n)$$

Pour cela, la matrice de transformation M peut être décomposée en sous-matrices le long d'une diagonale de ladite matrice, de la façon suivante, ceci pour une transformation DCT 16 x 16 :

$$M_{16x16} = P_{16} \cdot B_{16x16} \cdot S_{4,16} \cdot S_{8,16} \cdot S_{16,16}$$

Le dispositif de transformation directe de données d'origine (x) en données transformées (X) selon l'invention, symétrique du dispositif de transformation inverse, comprend ainsi :

- des moyens de combinaison linéaire (16,17,18), aptes à combiner linéairement les données d'origine,
- des modules de calcul échelonnables (12,13,14,15), aptes à effectuer un produit de données issues des moyens de combinaison linéaire et d'une sous-matrice,
- des moyens de permutation (11), aptes à réordonner les données issues des modules de calcul échelonnables selon un nombre de données à traiter, afin de fournir les données transformées.

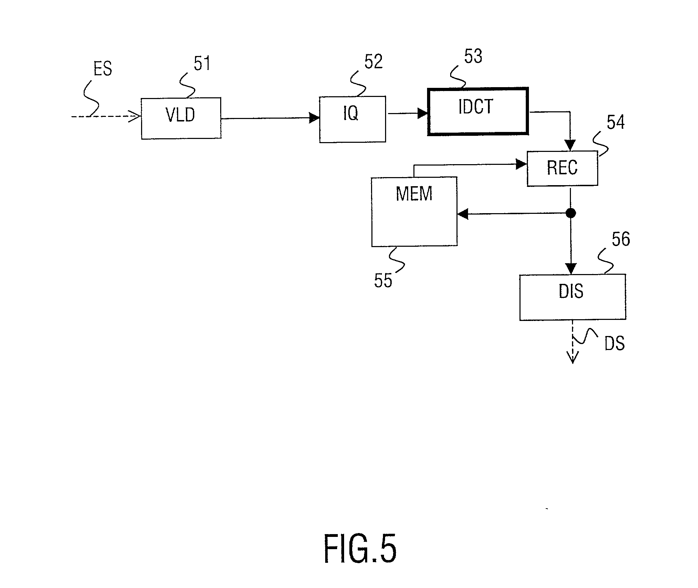

La Fig. 5 représente un décodeur vidéo pour la décompression de données numériques vidéo compressées (ES) en données numériques vidéo décompressées (DS), ledit dispositif comprenant un dispositif de transformation inverse selon l'invention.
Le décodeur vidéo comprend :

- des moyens de décodage à longueur variable VLD (51) des données numériques compressées, aptes à fournir des données quantifiées,
- des moyens de quantification inverse IQ (52) des données quantifiées, aptes à fournir des données transformées,
- un dispositif de transformation en cosinus discrète inverse IDCT (53) de données transformées en données inversement transformées, tel que précédemment décrit.

Le décodeur vidéo comprend en outre une étape de reconstruction REC (54) de l'image bloc de données par bloc de données, grâce à une mémoire d'image MEM (55), en vue de son affichage sur un écran DIS (56).

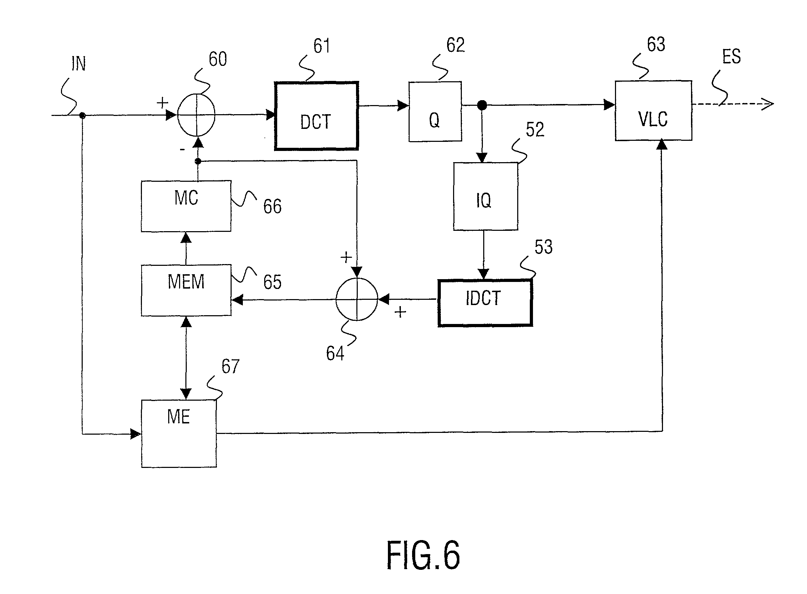

La Fig. 6 représente un codeur vidéo pour la compression de données numériques vidéo d'entrée (IN) en données vidéo numériques compressées (ES). Ledit codeur comprend une unité de codage comportant

- un dispositif de transformation en cosinus discrète directe DCT (61) de données numériques vidéo en données transformées, tel que précédemment décrit,
- des moyens de quantification Q (62) des données transformées, aptes à fournir des données quantifiées, et
- des moyens de codage à longueur variable VLC (63) des données quantifiées, aptes à fournir des données compressées.

Le codeur vidéo comprend éventuellement une unité de prédiction comprenant en séries :

- des moyens de quantification inverse IQ (52) des données quantifiées, aptes à fournir des données transformées,
- un dispositif de transformation en cosinus discrète inverse IDCT (53) de données transformées en données inversement transformées, tel que précédemment décrit,
- un additionneur (64) des données issues du dispositif de transformation IDCT et d'un dispositif de compensation de mouvement MC (66),
- une mémoire d'images MEM (65), apte à stocker les images utilisées par le dispositif de compensation de mouvement MC et un dispositif d'estimation de mouvement ME (67),
- le dispositif de compensation de mouvement MC, et
- un soustracteur (60), apte à soustraire les données issues du dispositif de compensation de mouvement des données vidéo numériques d'entrée (IN), le résultat de ce soustracteur étant délivré au dispositif de transformation DCT.

Aucun signe de référence entre parenthèses dans le présent texte ne doit être interprété de façon limitative. Le verbe "comprendre" et ses conjugaisons doivent également être interprétés de façon large, c'est à dire comme n'excluant pas la présence non seulement d'autres éléments ou étapes que ceux listés après ledit verbe, mais aussi d'une pluralité d'éléments ou d'étapes déjà listés après ledit verbe et précédés du mot "un" ou "une".

## Revendications

1. Dispositif de transformation inverse de données transformées (X) en données inversement transformées (x) via une matrice de transformation inverse décomposable en sous-matrices le long d'une diagonale de la matrice, ledit dispositif comprenant :

   - des moyens de permutation (11), aptes à réordonner les données transformées selon un nombre de données à traiter,
- des modules de calcul échelonnables (12,13,14,15), aptes à effectuer un produit de données transformées réordonnées et d'une sous-matrice,
- des moyens de combinaison linéaire (16,17,18), aptes à combiner linéairement les données issues des modules de calcul échelonnables selon le nombre de données à traiter.

2. Dispositif de traitement de données transformées selon la revendication 1, **caractérisé en ce que** les moyens de calcul échelonnables sont basés sur des algorithmes d'arithmétique distribuée.

3. Dispositif de traitement de données transformées selon la revendication 1, **caractérisé en ce qu'**il comprend en outre des moyens de sélection (19), aptes à sélectionner les données issues d'un premier module de calcul échelonnable (12) ou des moyens de combinaison linéaire (16,17,18) selon le nombre de données à traiter, afin de fournir les données inversement transformées.

4. Dispositif de transformation de données d'origine (x) en données transformées (X) via une matrice de transformation décomposable en sous-matrices le long d'une diagonale de la matrice, ledit dispositif comprenant :

   - des moyens de combinaison linéaire (16,17,18), aptes à combiner linéairement les données d'origine,
   - des modules de calcul échelonnables (12,13,14,15), aptes à effectuer un produit de données issues des moyens de combinaison linéaire et d'une sous-matrice,
   - des moyens de permutation (11), aptes à réordonner les données issues des modules de calcul échelonnables selon un nombre de données à traiter, afin de fournir les données transformées.

5. Décodeur vidéo comprenant des moyens de décodage à longueur variable (51) des données numériques compressées, aptes à fournir des données quantifiées, des moyens de quantification inverse (52) des données quantifiées, aptes à fournir des données transformées (X) et un dispositif de transformation inverse (53) de données transformées en données inversement transformées (x) selon l'une des revendications 1 à 3.

6. Codeur vidéo comprenant un dispositif de transformation (61) de données d'origine (x) en données transformées (X) selon la revendication 4.

7. Codeur vidéo selon la revendication 6, comprenant en outre des moyens de prédiction comportant un dispositif de transformation inverse (53) de données transformées (X) en données inversement transformées (x) selon l'une des revendications 1 à 3.

8. Procédé de transformation inverse de données transformées (X) en données inversement transformées (x) via une matrice de transformation inverse, **caractérisé en ce qu'**il comprend les étapes de :

   - décomposition de la matrice de transformation inverse en sous-matrices le long d'une diagonale de la matrice,
   - calcul, destinée à effectuer un produit de données transformées et d'une sous-matrice,
   - combinaison linéaire, destinée à combiner linéairement les données issues de l'étape de calcul.

9. Procédé de transformation de données d'origine (x) en données transformées (X) via une matrice de transformation, **caractérisé en ce qu'**il comprend les étapes de :

   - décomposition de la matrice de transformation en sous-matrices le long d'une diagonale de la matrice,
   - de combinaison linéaire, destinée à combiner linéairement les données d'origine,
   - calcul, destinée à effectuer un produit de données issues de l'étape de combinaison linéaire et d'une sous-matrice.

10. Appareil de visualisation, en particulier récepteur de télévision, comprenant un décodeur vidéo selon la revendication 5.

FIG.1

FIG. 2a

FIG. 2b

FIG. 2c

FIG.2d

FIG. 3a

FIG. 3b

EP 1 324 210 A1

FIG.3c

FIG.4b

FIG.4a

FIG.5

FIG.6

EP 1 324 210 A1

**Office européen
des brevets**

**RAPPORT DE RECHERCHE EUROPEENNE**

Numéro de la demande

EP 02 08 0378

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 275 765 A (SGS THOMSON MICROELECTRONICS) 27 juillet 1988 (1988-07-27) --- | | G06F17/14 |
| A | DEMASSIEUX N ET AL: "AN OPTIMIZED VLSI ARCHITECTURE FOR A MULTIFORMAT DISCRETE COSINE TRANSFORM" INTERNATIONAL CONFERENCE ON ACOUSTICS, SPEECH & SIGNAL PROCESSING. ICASSP. DALLAS, APRIL 6 - 9, 1987, NEW YORK, IEEE, US, vol. 1 CONF. 12, 6 avril 1987 (1987-04-06), pages 547-550, XP000039814 --- | | |
| A | ARTIERI A ET AL: "A ONE CHIP VLSI FOR REAL TIME TWO-DIMENSIONAL DISCRETE COSINE TRANSFORM" PROCEEDINGS OF THE INTERNATIONAL SYMPOSIUM ON CIRCUITS AND SYSTEMS. ESPOO, FINLAND, JUNE 7 - 9, 1988, NEW YORK, IEEE, US, vol. 1 CONF. 21, 7 juin 1988 (1988-06-07), pages 701-704, XP000093138 ISBN: 951-721-239-9 --- | | **DOMAINES TECHNIQUES RECHERCHES (Int.Cl.7)** G06F |
| A | THUYEN LE ET AL: "Flexible architectures for DCT of variable-length targeting shape-adaptive transform" IEEE TRANSACTIONS ON CIRCUITS AND SYSTEMS FOR VIDEO TECHNOLOGY, DEC. 2000, IEEE, USA, vol. 10, no. 8, pages 1489-1495, XP002210971 ISSN: 1051-8215 ----- | | |

Le présent rapport a été établi pour toutes les revendications

| Lieu de la recherche | Date d'achèvement de la recherche | Examinateur |
|---|---|---|
| LA HAYE | 14 février 2003 | Pierfederici, A |

**ANNEXE AU RAPPORT DE RECHERCHE EUROPEENNE
RELATIF A LA DEMANDE DE BREVET EUROPEEN NO.**                    EP 02 08 0378

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-02-2003

| Document brevet cité au rapport de recherche | Date de publication | Membre(s) de la famille de brevet(s) | | Date de publication |
|---|---|---|---|---|
| EP 0275765 A | 27-07-1988 | FR | 2608808 A1 | 24-06-1988 |
| | | DE | 3777795 D1 | 30-04-1992 |
| | | EP | 0275765 A1 | 27-07-1988 |
| | | JP | 2679007 B2 | 19-11-1997 |
| | | JP | 63167967 A | 12-07-1988 |
| | | US | 4873658 A | 10-10-1989 |
| | | US | RE34734 E | 20-09-1994 |

EPO FORM P0460

Pour tout renseignement concernant cette annexe : voir Journal Officiel de l'Office européen des brevets, No.12/82